# DEMANDE DE BREVET EUROPEEN

(11) **EP 1 422 461 A1**
(43) Date de publication de la demande: **26.05.2004**
(21) Numéro de dépôt: 03356179.6
(22) Date de dépôt: 18.11.2003
(51) Int. Cl.: F16L 37/084

(54) **Raccord rapide pour la jonction amovible de deux canalisations**

(30) Priorité: 19.11.2002 FR 0214466; 16.09.2003 FR 0310854
(71) Demandeur: STÄUBLI FAVERGES, 74210 Faverges (FR)
(72) Inventeur: Lacroix, Jean-Jacques, 74330 Lovagny (FR); Pastore, Olivier, 74210 Faverges (FR)
(74) Mandataire: Myon, Gérard

(57) **Abrégé**

Ce raccord (1) comprend un élément mâle (B) apte à être emmanché dans un élément femelle (A) et maintenu dans cette position par un verrou (5) formant butée (54, 55) et s'opposant à un mouvement de retrait de ce dernier.

Le corps (1) de l'élément femelle (A) comprend une partie principale (12) dans laquelle est immobilisée axialement une partie secondaire (14) reliée à l'une (C₁) des canalisations (C₁, C₂) dont le raccord assure la jonction. L'immobilisation entre ces parties principale (12) et secondaire (14) a lieu par accrochage de crans (142, 143) portés par la partie secondaire (14) avec des crans complémentaires (132, 133) portés par la partie principale (12).

## Description

L'invention a trait à un raccord rapide pour la jonction amovible de canalisations de fluide sous pression.

Par le brevet FR-2 514 855, on connaît un raccord rapide qui comprend deux éléments mâle et femelle propres à s'emmancher axialement en provoquant l'ouverture d'un clapet monté dans le corps de l'élément femelle, ce corps étant équipé d'un bouton ou verrou chargé, monté à coulissement dans ce corps et percé d'une ouverture centrale pour l'emmanchement de l'élément mâle. L'élément femelle est constitué de deux pièces tubulaires assemblées l'une à l'autre par vissage, ce qui requiert la réalisation d'un filetage et d'un taraudage sur ces pièces ainsi qu'un soin particulier de l'opérateur qui assemble cet élément, faute de quoi le filet et/ou le taraudage risquent d'être faussés.

Les mêmes limitations se retrouvent dans les raccords connus des brevets français 2 724 710 et américain 5,806,832.

C'est à ces inconvénients qu'entend plus particulièrement remédier l'invention en proposant un raccord entre des canalisations véhiculant des fluides sous pression dont l'élément femelle est économique et simple à assembler.

A cet effet, l'invention a pour premier objet un raccord rapide pour la jonction amovible de deux canalisations parcourues par un fluide sous pression, ce raccord comprenant deux éléments mâle et femelle aptes à s'emmancher axialement l'un dans l'autre, le corps de l'élément femelle comprenant une partie principale dans laquelle est immobilisée axialement une partie secondaire reliée à l'une des canalisations, caractérisé en ce que l'immobilisation entre les parties principale et secondaire a lieu par accrochage d'au moins un cran porté par la partie secondaire avec au moins un cran complémentaire portés par la partie principale.

Grâce à l'invention, l'assemblage de l'élément femelle est économique, simple, fiable et robuste et un éventuel défaut d'alignement des parties principale et secondaire en cours de montage induit peu de risques de détériorer ces parties au point d'empêcher leur solidarisation, alors que tel pourrait être le cas avec des éléments vissés.

Selon des aspects avantageux mais non obligatoires de l'invention, le raccord incorpore une ou plusieurs des caractéristiques suivantes :
- L'immobilisation a lieu par accrochage de plusieurs crans portés par la partie secondaire avec des crans complémentaires portés par la partie principale.
- Le ou les crans portés par la partie secondaire sont ménagés sur sa surface radiale externe.
- Le ou les crans complémentaires portés par la partie principale sont ménagés sur la surface radiale interne d'un alésage de réception de la partie secondaire.
- La partie secondaire est immobilisée axialement par rapport à la partie principale avec possibilité de rotation par rapport à celle-ci autour d'un axe central de l'élément femelle. Ceci permet d'ajuster la position angulaire relative de ces parties, notamment lorsque la partie secondaire est fixe pour faciliter l'accès à un bouton de commande d'un verrou.
- Un clapet mobile est monté dans la partie secondaire. Celle-ci définit avantageusement une gorge de réception d'un joint d'appui de ce clapet.
- Un joint d'étanchéité, destiné à coopérer avec l'élément mâle est monté dans la partie secondaire, ce qui assure l'étanchéité en configuration connectée du raccord.
- Le corps de l'élément femelle est équipé d'un verrou chargé par des moyens élastiques, monté à coulissement dans un logement ménagé dans la partie principale et percé d'une ouverture pour l'emmanchement de l'élément mâle ou d'une pièce déplacée par cet élément.

L'invention sera mieux comprise et d'autres avantages de celle-ci apparaîtront plus clairement à la lecture de la description qui va suivre de deux modes de réalisation d'un raccord conforme à l'invention, donnée uniquement à titre d'exemple et faite en se référant aux dessins annexés dans lesquels :
- la figure 1 est une coupe longitudinale d'un raccord conforme à l'invention dans une première position où ses éléments mâle et femelle sont accouplés, le fluide circulant entre ces deux éléments,
- la figure 2 est une coupe analogue à la figure 1, mais à plus petite échelle, dans une seconde position où les éléments mâle et femelle sont maintenus en configuration de décompression d'une canalisation raccordée sur l'élément mâle par pression sur le bouton ou verrou de retenue ; certains éléments sont tronqués pour la clarté du dessin,
- la figure 3 est une coupe analogue à la figure 1 mais à plus petite échelle, un verrou de blocage étant dans la même position qu'à la figure 2, alors qu'un organe de sécurité bloque le verrou lors d'une phase de diminution de la pression régnant dans la canalisation précitée,
- la figure 4 est une coupe analogue à la figure 2, alors que l'organe de sécurité est en position de repos, la pression interne étant faible, l'élément mâle pouvant être librement retiré du raccord,
- la figure 5 est une coupe longitudinale d'un raccord conforme à un second mode de réalisation de l'invention dans une configuration analogue à celle de la figure 1,
- la figure 6 est une coupe analogue à la figure 3 et à la même échelle pour le raccord de la figure 5, et
- la figure 7 est une coupe analogue à la figure 4 et à la même échelle pour le raccord des figures 5 et 6.

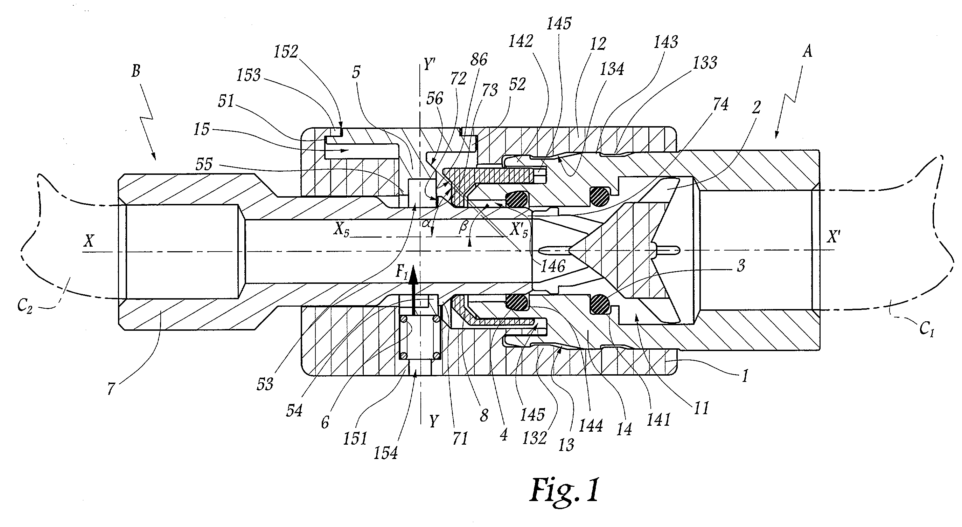

Le raccord représenté aux figures 1 à 4 comprend un élément femelle A et un élément ou embout mâle B raccordés respectivement à une canalisation amont C₁ et à une canalisation aval C₂. La canalisation amont C₁ est, elle même, raccordée à une source de fluide sous pression non représentée.

Le corps 1 de l'élément femelle est de forme externe globalement cylindrique et circulaire, centré sur un axe X-X' qui est également l'axe longitudinal d'un conduit 11 interne au corps 1 et dans lequel est disposé un clapet 2 mobile selon l'axe X-X'. Le corps 1 est bi-partite et comprend une partie principale 12 formant un alésage 13 dans lequel est immobilisée une partie secondaire 14 solidaire de la canalisation C₁. En pratique, le clapet 2 est monté dans la partie 14 qui définit une gorge 141 de réception d'un joint 3 d'appui étanche du clapet 2.

La surface radiale externe de la partie 14 est pourvue de crans 142 et 143 destinés à coopérer avec des crans 132 et 133 prévus sur la surface radiale interne 134 de l'alésage 13. La coopération des crans 132, 133, 142 et 143 permet une immobilisation ferme de la partie 14 dans l'alésage 13 de la partie 12, ces parties étant avantageusement en métal.

L'immobilisation obtenue par la coopération des crans 132, 133, 142 et 143 est essentiellement axiale, en ce sens qu'elle s'oppose à un mouvement d'extraction de la partie 14 hors de l'alésage 13, selon une direction parallèle à l'axe X-X'.

La partie 14 définit une seconde gorge 144 de réception d'un joint 4 destiné à coopérer avec la surface radiale externe 75 du corps 7 de l'élément mâle B.

Le corps 1 est également pourvu d'un logement 15 s'étendant globalement dans la direction d'un axe Y-Y' perpendiculaire à l'axe X-X', c'est-à-dire radial. Le logement 15 est ménagé dans la partie 12 du corps 11. A l'intérieur du logement 15 est monté, à coulissement, un verrou 5 sur lequel un ressort 6 exerce un effort élastique F₁ dirigé à l'opposé du fond 151 du logement 15, c'est-à-dire en direction de son débouché 152. Le mouvement du verrou 5 sous l'effet de l'effort F₁ est limité par deux saillies 51 et 52 venant en appui contre le bord 153 du débouché 152. Le fond 151 du logement 15 est pourvu d'un orifice 154 reliant le logement 15 à l'atmosphère ambiante.

Le logement 15 croise le conduit 11 qui traverse la partie 12 de part en part.

Le verrou 5 est pourvu d'une ouverture transversale 53 centrée sur un axe X₅-X'₅ parallèle à l'axe X-X'. L'ouverture 53 est bordée par deux dents 54 et 55 qui s'étendent à partir de la circonférence de l'ouverture 53 en direction de l'axe X₅-X'₅. La dent 54 est la plus éloignée du débouché 111 du conduit 11 du côté de l'embout mâle B, alors que la dent 55 est la plus proche de ce débouché.

Dans la configuration de la figure 1, et en l'absence d'effort exercé par un utilisateur sur le verrou 5, ce verrou est soumis à l'action du ressort 6, de telle sorte que sa dent 54 est insérée en arrière d'un épaulement 72 formé par une collerette 71 prévue à la périphérie du corps métallique 7 de l'embout mâle B. La collerette 71 est également pourvue d'une rampe inclinée 73 tronconique et convergente en direction de l'extrémité avant 74 du corps 7.

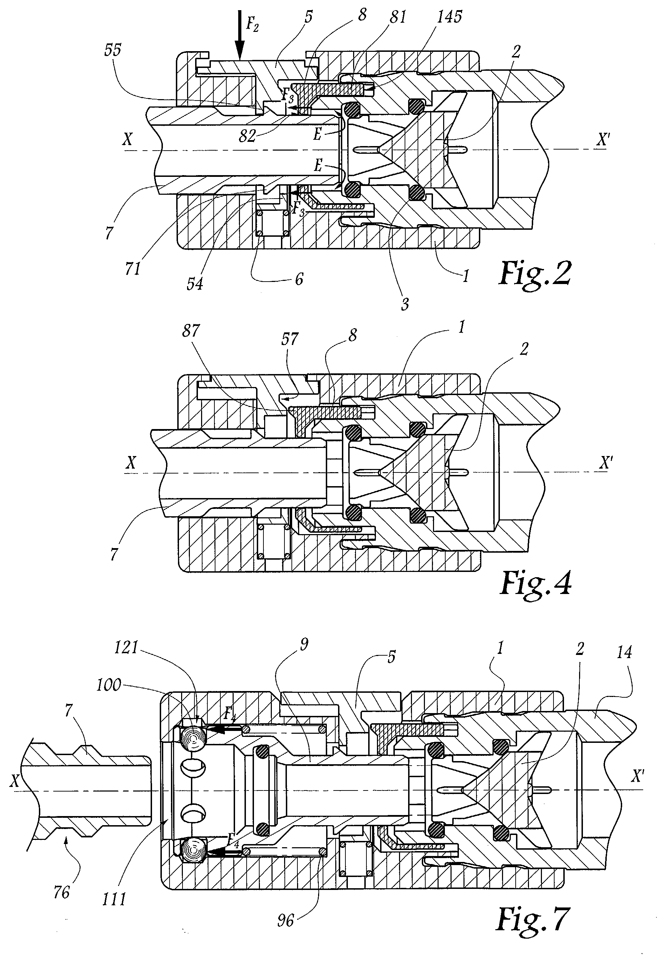

Lorsqu'il convient de déverrouiller le raccord, un effort F₂ est exercé sur le verrou 5, ce qui a pour effet d'escamoter la dent 54 de la trajectoire de retrait de la collerette 71, comme représenté à la figure 2. Sous l'effet de la pression régnant dans la canalisation C₂, le clapet est repoussé vers le joint 3. L'embout 7 se déplace, selon l'axe X-X', dans le même sens et la collerette 71 vient en appui contre la dent 55 du verrou ou bouton 5.

De façon avantageuse, la forme des crans 132, 133, 142 et 143 est prévue telle qu'un mouvement angulaire des parties 12 et 14 est possible autour de l'axe X-X'. Ceci permet d'orienter angulairement ces parties l'une par rapport à l'autre, ce qui s'avère très pratique, notamment lorsque la partie 14 est fixe, par exemple vissée sur un support. Dans ce cas, il est en effet possible de faire tourner la partie 12 autour de l'axe X-X' pour orienter le logement 15 selon une direction radiale telle que l'accès au verrou 5 est aisé, en particulier pour l'application de l'effort F₂. L'accessibilité et la manoeuvrabilité du raccord en sont améliorées.

Un piston 8 est en place dans le conduit 11 du corps 1, ce piston pouvant coulisser dans la direction de l'axe X-X'. Le piston 8 comprend une jupe 81 engagée dans un logement 145 formé dans la partie 14 et dans une partie 112 du conduit 11 définie entre les parties 12 et 14 du corps 1. La coopération de la jupe 81 et du logement 145 permet de guider en translation le piston 8.

Ce piston 8 est pourvu d'une ouverture centrale 82 permettant le passage de l'embout 7, de telle sorte que le piston 8 est disposé autour de l'embout 7, à l'intérieur du conduit 11 et dans une partie de ce conduit définie par les pièces 12 et 14 dans les configurations des figures 1 à 4. Le fait que le corps 1 est bi-partite permet la mise en place du piston 8 et son emprisonnement dans le conduit 11.

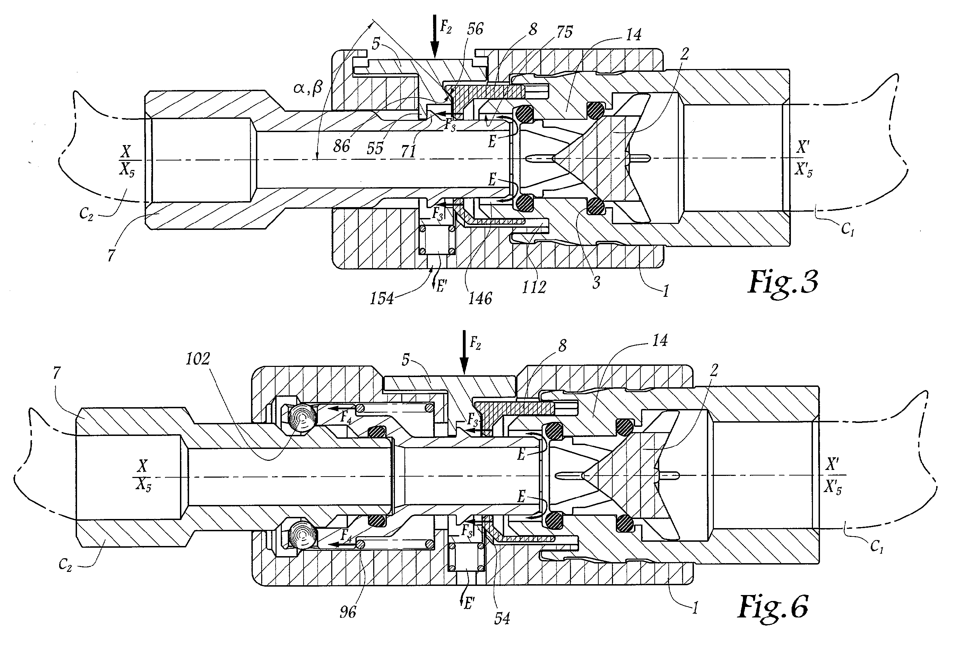

L'ouverture 82 a une forme et des dimensions voisines des dimensions transversales externes de la partie avant de l'embout 7. Ainsi, à partir de la configuration de la figure 2, le fluide sous pression se trouvant dans la canalisation C₂ s'écoule, comme représenté par les flèches E, autour de l'embout 7, dans un passage 146 formé entre la surface radiale interne de la pièce 14 et la surface radiale externe 75 de l'embout 7, au point que la pression du fluide présent dans la canalisation C₂ et dans l'embout 7 exerce sur le piston 8 un effort F₃ qui pousse le piston 8 en direction du verrou 5, pour atteindre la position de la figure 3.

Le verrou 5 est pourvu d'une surface 56 qui est en secteur de tronc de cône, centrée sur l'axe X₅-X'₅ et convergente en direction du clapet 4, c'est-à-dire de l'amont du raccord.

Le verrou 8 est, quant à lui, pourvu d'une surface 86 également en forme de secteur de tronc de cône, centrée sur l'axe X-X' et convergente en direction de l'amont du raccord. On note respectivement α et β les demi-angles au sommet de ces surfaces 56 et 86. Les angles α et β ont la même valeur qui est de l'ordre de 45°.

Les surfaces 56 et 86 pourraient avoir une géométrie autre qu'en secteur de tronc de cône. Il pourrait s'agir de parties de dents rectilignes complémentaires orthogonales à l'axe X-X' et pourvues d'une face oblique par rapport à celui-ci.

Le déplacement du verrou 5 sous l'effet de l'effort F₂ a pour effet d'aligner l'axe X₅-X'₅ sur l'axe X-X', de telle sorte que, sous l'effet de l'effort F₃, la surface 86 du piston 8 vient en appui contre la surface 56 du verrou 5, ce qui immobilise ce verrou dans la position de la figure 3 où il empêche la libération de l'embout 7 tant que l'effort F₃, généré par la pression régnant à l'intérieur de la canalisation C₂ et de l'embout 7, est supérieure à une valeur prédéterminée qui dépend de l'effort F₁, c'est-à-dire de la constante de raideur du ressort 6, et ce, indépendamment de l'effort F₂ qui peut alors être ou non exercé sur le bouton ou verrou 5.

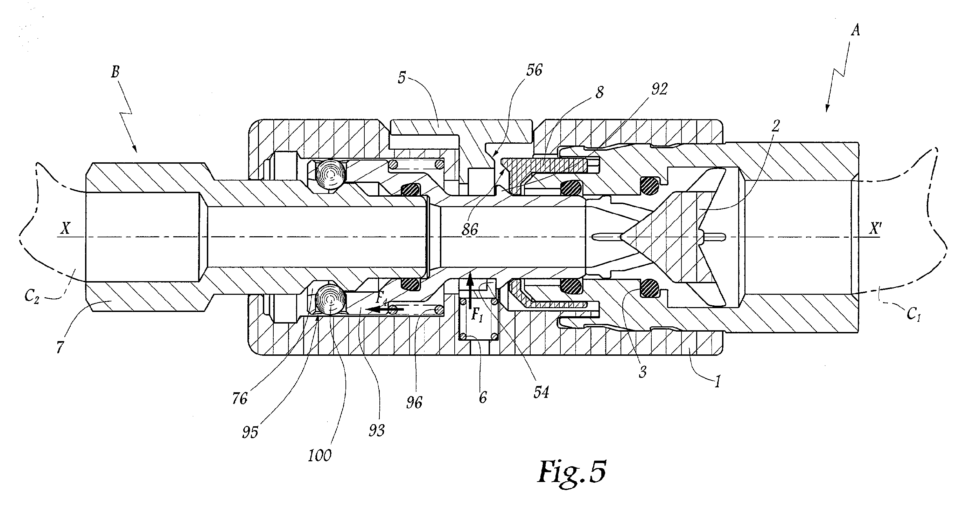

En pratique, des fuites se produisent à la jonction entre le bord de l'ouverture 82 et la surface 75 et autour de la jupe 81, ces fuites résultant dans un écoulement E' de gaz sous pression vers l'extérieur du logement 15, à travers l'orifice 154. Ainsi, la pression dans la canalisation C₁ et dans l'embout 7 diminue progressivement, de même que l'effort F₃ qui peut alors être vaincu par l'effort F₁ exercé par le ressort 6, ce qui entraîne alors un glissement des surfaces 56 et 86 l'une sur l'autre, le renvoi du piston 8 en direction du fond du logement 145 et la libération du verrou 5 qui atteint alors la position de la figure 4 où sa dent 55 ne s'oppose plus au retrait de l'embout mâle B par rapport à l'élément femelle A.

La surface 86 est formée par un nez 87 du piston 8 qui peut s'engager dans un renfoncement 57 prévu à cet effet sur le verrou 5.

Les mouvements de translation du piston 8 parallèlement à l'axe X-X' résultent des variations de pression dans le conduit 11 de l'effort de réaction transmis entre les surfaces 56 et 86, sans qu'il soit nécessaire d'utiliser un ressort de rappel, ce qui améliore la fiabilité du raccord et permet d'augmenter ses performances économiques.

Le caractère convergent vers l'amont des surfaces 56 et 86 permet le renvoi du piston vers le logement 145 sous l'effet de l'effort F₁ lorsque celui-ci vainc l'effort F₃.

La surface inclinée 56 du verrou 5 a une pente et une orientation telles qu'elles facilitent le dégagement du nez 87 porté par le piston 8 lors du mouvement du verrou 5. Suivant la géométrie et l'inclinaison des surfaces 56 et 86, le dégagement se fait plus ou moins facilement en fonction de la pression résiduelle restante, cela pour un même ressort 13. On peut ainsi « tarer » le raccord 1 pour que le désaccouplement soit possible à partir d'une pression interne résiduelle donnée.

Dans le second mode de réalisation de l'invention représenté aux figures 5 à 7, les éléments analogues à ceux du premier mode de réalisation portent des références identiques. Les éléments femelle A et mâle B de ce raccord sont destinés à s'emmancher axialement l'un dans l'autre et il est prévu, dans le corps 1 de l'élément femelle A un verrou 5 et un piston 8 similaires à ceux du premier mode de réalisation, ces organes étant pourvus de surfaces respectives 56 et 86 de blocage en configuration de purge ou de mise à l'air du volume interne de la canalisation aval C₂ et de l'embout mâle 7. Un ressort 6 exerce sur le verrou 5 un effort F₂ dirigé vers le haut sur les figures 5 à 7.

Une pièce intermédiaire 9 est logée dans le conduit principal du corps 1 de l'élément femelle et comporte une partie cylindrique 91 pourvue d'une collerette 92, cette partie 91 ayant sensiblement la même géométrie externe que la partie avant du corps 7 du premier mode de réalisation. La pièce 9 comporte également une partie 93 de diamètre plus important que la partie 91 et définissant un logement de réception d'un embout mâle 7 du type de celui décrit dans le brevet FR-2 724 710.

La partie 93 est pourvue, sur sa circonférence, de plusieurs logements 95 de réception de billes 100 susceptibles d'être engagées dans une gorge périphérique 76 du corps 7 qu'elles retiennent alors en position dans la partie 93. Un ressort 96 exerce sur la pièce 9 un effort F₄ dirigé vers le débouché 111 du conduit 11.

Le fonctionnement est le suivant :
Dans la configuration de la figure 5, la dent 54 du verrou 5 maintient la pièce 9 en configuration de circulation de fluide à travers le raccord, l'effort F₄ exercé par le ressort 96 étant alors vaincu et les billes 100 étant alors en regard d'une partie cylindrique à génératrice rectiligne 115 du conduit 11, de telle sorte qu'elles sont engagées dans la gorge 76 et retiennent l'embout 7 prisonnier.

Lorsqu'il convient de déverrouiller le raccord, un effort F₂ est exercé sur le verrou 5, ce qui a pour effet de dégager la dent 54 par rapport à la collerette 92 qui vient alors en appui contre la seconde dent 55 du verrou 5. Comme précédemment, sous l'effet de l'écoulement E du fluide sous pression, le piston 8 est déplacé par l'effort F₃ en direction du verrou 5, au point que sa surface 86 vient au contact de la surface correspondante 56 du verrou 5. L'effort F₄ dû au ressort 96 déplace légèrement la pièce 9 à l'intérieur du conduit 11, les billes 100 demeurant engagées dans la gorge 76 et retenant ainsi prisonnier l'embout 7.

Lorsque la pression dans la canalisation C₂ et dans les pièces 7 et 9 a diminué du fait des fuites organisées et représentées par l'écoulement E', le piston 8 libère le verrou 5 qui se déplace, sous l'effet de l'effort F₁ dû au ressort 6 vers la position de la figure 7 où la collerette 92 est libérée de la dent 55, ce qui a pour effet de laisser le ressort 96 pousser la pièce 9 en direction du débouché 111 du conduit 11. Les billes 100 sont ainsi amenées en regard d'une gorge radiale interne 121 ménagée dans la pièce 12, ce qui permet d'extraire les billes 100 de la gorge 76 du corps 7 de l'embout B et de libérer ainsi cet embout.

Selon une variante non représentée de l'invention, un seul cran peut être prévu sur la partie secondaire 14, alors qu'un seul cran correspondant est prévu sur la partie principale 12 pour l'accrochage des parties constitutives du corps de l'élément femelle.

Selon une autre variante également non représentée, le ou les crans peuvent être prévus sur une zone femelle de la partie secondaire 14, alors que le ou les crans complémentaires sont prévus sur une zone mâle de la partie principale 12.

Quel que soit le mode de réalisation considéré, les éléments constitutifs du raccord sont avantageusement réalisés dans un matériau métallique ou dans un matériau plastique résistant aux pressions du fluide à acheminer et choisi en fonction de la nature du fluide.

## Revendications

1. Raccord rapide pour la jonction amovible de deux canalisations parcourues par un fluide sous pression, ledit raccord comprenant deux éléments mâle et femelle aptes à s'emmancher axialement l'un dans l'autre, le corps dudit élément femelle comprenant une partie principale dans laquelle est immobilisée axialement une partie secondaire reliée à l'une (C₁) des canalisations (C₁, C₂), **caractérisé en ce que** l'immobilisation entre lesdites parties principale (12) et secondaire (14) a lieu par accrochage d'au moins un cran (142, 143) porté par ladite partie secondaire (14) avec au moins un cran complémentaire (132, 133) porté par ladite partie principale (12).

2. Raccord rapide selon la revendication 1, **caractérisé en ce que** l'immobilisation entre lesdites parties principale (12) et secondaire (14) a lieu par accrochage de plusieurs crans (142, 143) portés par ladite partie secondaire (14) avec des crans complémentaires (132, 133) portés par ladite partie principale (12).

3. Raccord selon l'une des revendications 1 ou 2, **caractérisé en ce que** ledit ou lesdits crans (142, 143) portés par ladite partie secondaire (14) sont ménagés sur sa surface radiale externe.

4. Raccord selon l'une des revendications précédentes, **caractérisé en ce que** ledit ou lesdits crans complémentaires (132, 133) portés par ladite partie principale (12) sont ménagés sur la surface radiale interne (134) d'un alésage (13) de réception de ladite partie secondaire (14).

5. Raccord selon l'une des revendications précédentes, **caractérisé en ce que** ladite partie secondaire (14) est immobilisée axialement par rapport à ladite partie principale (12) avec possibilité de rotation par rapport à ladite partie principale autour d'un axe central (X-X') dudit élément femelle (A).

6. Raccord selon l'une des revendications précédentes, **caractérisé en ce qu'**un clapet mobile (2) est monté dans ladite partie secondaire (14).

7. Raccord selon la revendication 6, **caractérisé en ce que** ladite partie secondaire (14) définit une gorge (141) de réception d'un joint (3) d'appui dudit clapet (2).

8. Raccord selon l'une des revendications précédentes, **caractérisé en ce qu'**un joint d'étanchéité (4), destiné à coopérer avec l'élément mâle (B), est monté dans ladite partie secondaire.

9. Raccord selon la revendication 8, **caractérisé en ce que** ladite partie secondaire (14) définit une gorge (144) de réception dudit joint (4).

10. Raccord selon l'une des revendications précédentes, **caractérisé en ce que** le corps (1) de l'élément femelle est équipé d'un verrou (5) chargé par des moyens élastiques (6), monté à coulissement dans un logement (15) ménagé dans ladite partie principale (12) et percé d'une ouverture (53) pour l'emmanchement dudit élément mâle (B) ou d'une pièce (9) déplacée par ledit élément mâle.
